# EUROPEAN PATENT SPECIFICATION

(11) **EP 3 765 252 B1**
(45) Date of publication and mention of the grant of the patent: **06.07.2022**
(21) Application number: 19717369.3
(22) Date of filing: 12.03.2019
(51) Int. Cl.: B27B 5/06, B27B 5/075, B23D 47/04

(54) **MACHINE FOR CUTTING TO SIZE SLAB-SHAPED ELEMENTS**
MASCHINE ZUM ZURECHTSCHNEIDEN VON PLATTENFÖRMIGEN ELEMENTEN
MACHINE POUR LA COUPE À MESURE D'ÉLÉMENTS EN FORME DE DALLES

(30) Priority: 12.03.2018 IT 201800003455
(43) Date of publication of application: 20.01.2021
(73) Proprietor: Prisma S.r.l., 33078 San Vito al Tagliamento (PN) (IT)
(72) Inventor: PELLEGRINI, Gian Luca, 33080 FIUME VENETO (IT)
(74) Representative: Petraz, Gilberto Luigi
(86) International application number: PCT/IT2019/050052
(87) International publication number: WO 2019/175909

(56) References cited:
- EP-A1- 3 144 115
- DE-U1- 29 510 413
- FR-A- 1 601 451
- GB-A- 1 426 623
- US-A- 2 156 247

## Description

### FIELD OF THE INVENTION

The invention relates to a machine according to the preamble of claim 1 to cut to size slab-shaped elements, such as wooden panels and suchlike, generally usable for quickly and automatically obtaining from a matrix panel a plurality of modular sub-panels which have selectable sizes, without the need for stacking. The invention also relates to a method according to the preamble of claim 8.

### BACKGROUND OF THE INVENTION

Such a machine and such a method are known from US 2 156 247 A. Automatic machines have been known for some time which are used, typically in the field of working wood and its derivatives, to cut to size slab-shaped elements and boards to obtain modular sub-elements which have sizes selectable according to the needs.

In a recent embodiment of these automatic machines, described in EP 3.144.115, a bridge frame is provided which movably supports a prehensile unit, suitable to grip a slab-shaped element from a feed station to transport it by air in correspondence with a cutting station located downstream of the feed station.

In the cutting station there is a series of cutting units adjacent and aligned with each other with adjustable reciprocal interdistances, each of which comprises an operating head which supports a circular blade intended to perform a rectilinear cut in the slab-shaped element in a predetermined cutting direction.

In the cutting step, the prehensile unit, by holding in a fixed manner the slab-shaped element (or board) to be cut, is lowered by a height to allow the blades to engage the slab-shaped element sectioning it according to the number of rectilinear cuts required, also performing more than one forward and back travel, and obtain a predetermined number of sub-elements cut in the cutting direction which, although separate, remain constrained to the prehensile unit in their position and which are, subsequently, transferred therefrom and released in their positions, in a deposit and distancing station toward successive processing stations.

The cutting units are supported on a common guide, which is transverse to the cutting direction, and are positioned in positions that can be fixed with respect to the prehensile unit, that is with interaxes adjustable according to needs, before starting the cutting cycles.

The prehensile unit is instead mobile on the bridge frame with forward and back travels both in the cutting direction, between two end positions, both vertically, and also again in a direction transverse to the cutting direction.

In this way, the prehensile unit, after removing a slab-shaped element to be cut, performs an active forward travel during which all the cutting units perform the respective cuts, generating sub-elements which have predetermined sizes and which, after having completed the cuts, remain supported by the prehensile unit.

The two stations, feed station and deposit and distancing station, are made in the form of respective transporters.

In particular, on the feed transporter the slab-shaped elements to be cut are positioned in such a way as to identify in a known manner a "zero" reference, that is a predetermined initial position of each slab-shaped element (or board) of the movement cycle which, like the subsequent entire cutting and release cycles of the modular sub-elements obtained, is performed automatically, following a method previously programmed in an electronic control unit of the machine.

In detail, the prehensile unit is formed by a head which supports a plurality of parallel suction bars, each of which, in its lower zone, defines a suction surface which faces downward and which is connected to a common suction unit carried on board the prehensile unit.

The suction bars are supported parallel to the cutting direction and with pre-established interaxes; their overall suction action is sufficient to grip, lift and hold each slab-shaped element, both in the step of removal from the feed transporter, and during the step of performing the cuts in the cutting station, and again at the end of the performance thereof, before depositing the obtained sub-elements on the downstream transporter.

This state of the art has some disadvantages.

A first disadvantage is that, although EP 3144115 suggests the possibility of performing cuts of the slab-shaped elements also in a direction transverse to the normal cutting direction, this is in fact unachievable for the reason that even by rotating by a right angle all the blades of all the cutting units which are adjacent to each other, it would not be possible to perform a complete cutting of the slab-shaped elements, since, in a rotated position, all the blades would lie on a single and common cutting plane.

A second disadvantage is that, in order to be able to perform this hypothetical rotation of the blades of all the cutting units, it would be necessary to equip each of them with their own rotation apparatus synchronized with those of the other cutting units, and this would negatively affect the production costs of the machines to cut slab-shaped elements.

A third disadvantage is that the extent of the travel of the prehensile unit in the direction transverse to the normal cutting direction would need to be significantly increased to allow the complete cutting of each slab-shaped element, and this would determine a proportionally significant increase in the overall sizes of the frame which supports it.

A fourth disadvantage is that in order to make a cut also in the direction transverse to the typical cutting direction, it would be necessary to completely redesign the entire structure of the cutting station, with further increases in the costs of manufacturing the machines to cut the slab-shaped elements.

GB 1426623 describes a cutting machine equipped with two cutting units, respectively, longitudinal and transverse, in which the panel to be cut is moved by means of transport elements sliding on guides.

The Applicant has devised, tested and embodied the present invention to overcome the shortcomings of the state of the art described above.

### SUMMARY OF THE INVENTION

One purpose of the invention is to improve the state of the art.

Another purpose of the invention is to produce a machine to cut to size slab-shaped elements, such as, for example, wooden panels and suchlike, which allows to make cuts in two directions transverse to each other, preferably perpendicular, to obtain from a matrix slab-shaped element a predetermined number of modular sub-elements with pre-established and programmable sizes.

Another purpose of the invention is to produce a perfected machine to cut to size slab-shaped elements which has a relatively compact structure, simple to implement, able to automatically perform bidirectional cuts of the slab-shaped elements and manage their handling without requiring storage stations.

In particular, one characteristic of the present invention is that the slab-shaped elements are moved between the cutting units that operate in two directions transverse to each other by prehensile units which hold them and move them by air between the cutting stations without ever leaving them during the whole cutting cycle in both directions.

According to one aspect of the invention a machine is provided to cut to size slab-shaped elements, as defined by the features of claim 1. According to another aspect of the invention, a method as defined by the features of claim 8 is also provided.

Further aspects of the invention are defined by the features of the dependent claims.

The invention allows to obtain the following advantages:
- cutting slab-shaped elements in two perpendicular directions rapidly and with a substantially simple cutting structure;
- obtaining at each cycle of bidirectional cuts a predetermined number of sub-elements from a slab-shaped matrix element which have programmed sizes;
- significantly improving the performance of machines to cut slab-shaped elements.

### BRIEF DESCRIPTION OF THE DRAWINGS

Other characteristics and advantages of the invention will become apparent from the detailed description of preferred but non-exclusive embodiments of a perfected machine to cut to size slab-shaped elements, given as a non-restrictive example with reference to the attached drawings wherein:
FIG. 1 is a schematic front view of the perfected machine to cut to size slab-shaped elements, according to the invention;
FIG. 2 is a schematic view from above of the perfected machine of Fig. 1;
FIG. 3 is a schematic and enlarged scale view of second means for cutting the slab-shaped elements;
FIG. 4 is a detailed schematic view of a prehensile unit of the slab-shaped elements;
FIG. 5 is a detailed schematic view and on an enlarged scale of second means for cutting the slab-shaped elements;
FIG. 6 is a schematic view of cutting cycles of a slab-shaped element performed with the second cutting means of Fig. 5;

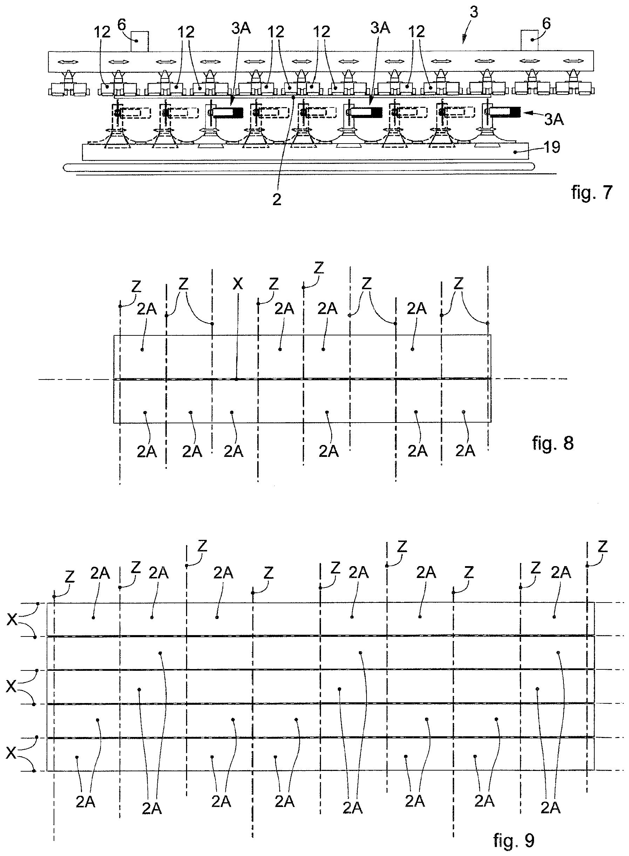

FIG. 7 is a schematic detailed view of first cutting means;
FIGS. 8 and 9 show a plan view of two cutting patterns of a slab-shaped element.

### DETAILED DESCRIPTION OF SOME EMBODIMENTS

With reference to the above drawings, 1 indicates a perfected machine to cut to size slab-shaped elements 2, typically panels of wooden material and suchlike.

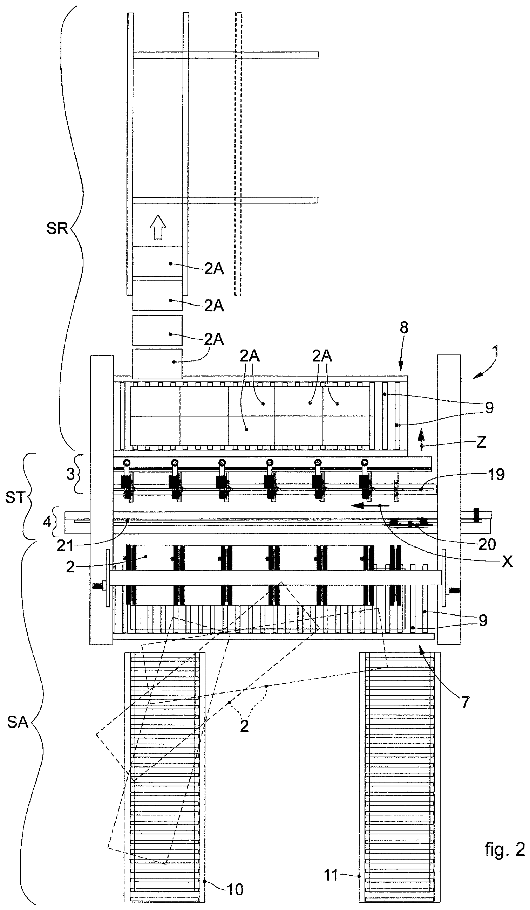

The perfected machine, hereafter in short machine 1, comprises, with reference to Fig. 2, a feed station "SA" of the slab-shaped elements 2, a release and distancing station "SR" of sub-elements 2A obtained after the cutting steps, a cutting station "ST" of the slab-shaped elements 2.

The cutting station "ST" comprises first cutting means 3 in a first cutting direction "Z" and second cutting means 4 in a second cutting direction "X", preferably perpendicular to the cutting direction "Z".

It must be noted that the definitions first cutting means 3 and second cutting means 4 do not indicate their operational order, but simply their distinction, since, as will be seen later, the slab-shaped elements 2 meet, in the cutting cycle, first the second cutting means 4 and then the first cutting means 3.

The machine 1 also comprises at least one prehensile unit 5 which is supported mobile to a support frame 6, typically a bridge-type frame, on which the prehensile unit 5 is mobile between the feed station "SA", the cutting station "ST" and the release and distancing station "SR", and vice versa.

The machine 1 is also served by two transporters 7 and 8, respectively to feed the slab-shaped elements 2 and to distance the slab-shaped elements 2 after they have been cut into sub-elements 2A.

As can be seen in the drawings, both transporters 7 and 8 are of the type with horizontal and parallel rollers 9 to provide the best support for the slab-shaped elements 2 both when they are in monolithic form and also when they are cut into sub-elements 2A.

In Fig. 2, it can be seen that the feed transporter 7 can in turn be served by further auxiliary transporters 10 and 11 on which the slab-shaped elements 2 to be cut are transported so as to have a feed without interruptions.

A person of skill in the art understands that the use of the two auxiliary transporters 10 and 11 is optional and depends on the functioning requirements of the machine 1.

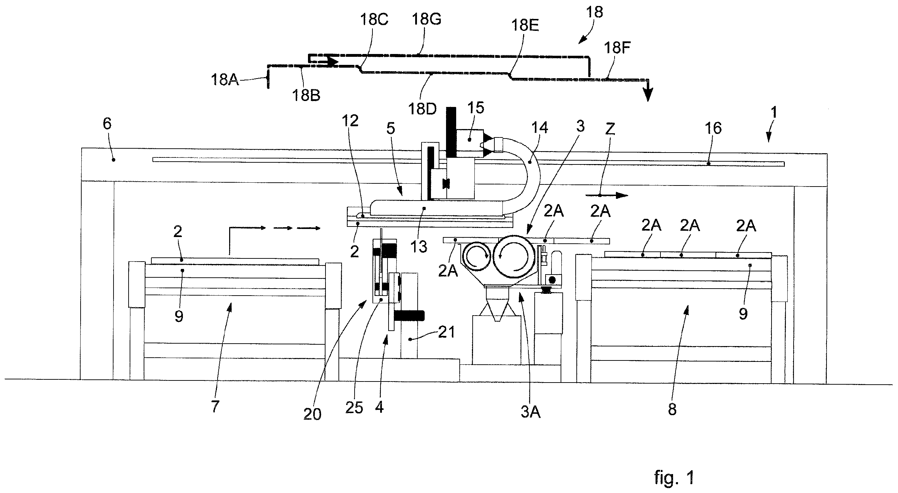

With reference to Figs. 1 to 5, it can be seen that the prehensile unit 5 comprises a plurality of parallel suction bars 12 which are connected to a collector 13 which, in turn, is connected, by means of a pipe 14, to a common suction apparatus 15 which is carried on board the prehensile unit 5.

All the suction bars 12 are perimetrically provided with reference divisions 12A which allow to detect the contact of the bars 12 with the surfaces of the slab-shaped elements 2.

As can be seen in the drawings, the prehensile unit 5 is provided both with movement along the frame 6, guided in a guide 16, and also with a vertical movement according to the arrows "Y", driven with drive means 17, which are also carried on board the prehensile unit 5.

The displacements of the latter allow to perform a complete cutting operative cycle which is indicated in Fig. 1 as a whole with the reference number 18.

In practice, the prehensile unit 5 follows a first vertical segment 18A of operative cycle with which it removes a slab-shaped element 2 to be cut from the feed transporter 7.

Subsequently, the prehensile unit 5 performs a second horizontal segment 18B to transport the removed slab-shaped element 2 toward the cutting station "ST" by air.

Upon arriving above the latter, the prehensile unit 5 follows a third lowering segment 18C to take the slab-shaped element 2 to the height of the cutting units 3 and 4 and, to perform the cuts, it follows a further horizontal segment 18D with which it allows to cut to size the slab-shaped elements 2 into sub-elements 2A.

Subsequently, it performs a further lowering segment 18E followed by a final horizontal segment 18F to move above the transporter 8 in order to release the sub-elements 2A and to distance them toward successive working stations, or packaging and shipping stations.

Finally, the prehensile unit 5 performs a return segment 18G with which it returns to the beginning of the operative cycle.

As can be seen, during the entire cutting cycle in the two directions transverse to each other, the slab-shaped element 2 always remains gripped by the prehensile unit which moves it by air between the various operating stations.

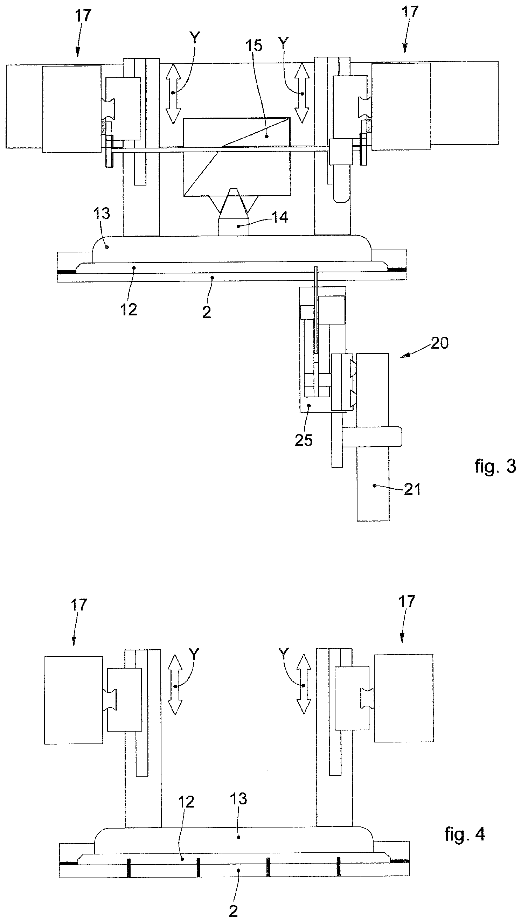

With reference to Figs. 1 and 3, it can be seen that the first cutting means 3 comprise a plurality of first cutting units 3A which are supported to the frame 6 by means of a crosspiece 19 with interaxes adjustable according to needs, as indicated by the dashed lines alternated with the solid ones.

This allows to also adjust the positions of the cuts, obtaining sub-elements 2A equal to each other or different when the interaxes between the first cutting units 3A are not the same.

With reference to Figs. 1, 2, 3, 5 it can be noted that the second cutting means 4 comprise at least one single second cutting unit 20 which has a dynamic cutting front and which is supported mobile to the frame 6 with forward and backward travels by means of an additional crosspiece or guide 21.

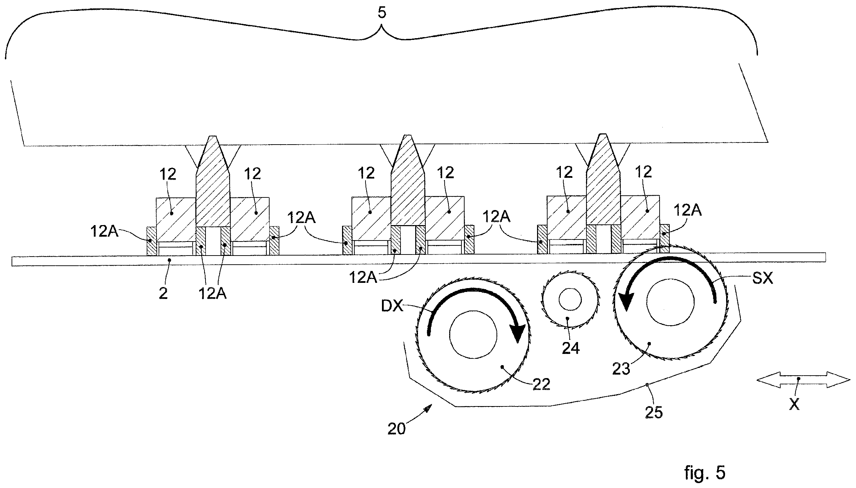

The second cutting unit 20 comprises a pair of circular blades 22 and 23 which are motorized rotating in opposite and converging directions of rotation, as shown in Fig. 5 with the arrows "DX" and "SX".

Between the two circular blades 22 and 23 a further blade 24 of smaller diameter is interposed, which has the function of pre-incisor of the slab-shaped elements 2 before the intervention of the blades 22 and 23, avoiding chipping or splintering of the cutting edges of the sub-elements 2A.

All the blades 22, 23, 24 are supported to a rocker arm body 25 which is slidable along the crosspiece 21 and which can rotate according to arcs of circumference between two end positions in which the blade 22 remains lower than the blade 23 or vice versa.

A person of skill in the art understands that the raised position of one of the blades 22 or 23 determines which of these two actively performs the cutting action, while the other, although motorized, remains idle, as shown in Fig. 5 in which the blade 23 is in the active raised cutting position while the blade 22 is in an idle lowered position.

The exchange of the active and idle positions between the two blades 22 and 23 takes place automatically with each cutting travel that the second cutting unit 20 performs.

With reference to Fig. 5, it can be noted that the blade 23, during the active cutting travel, interferes with the reference divisions 12A of the suction bars 12.

According to the invention, it is provided that the reference divisions 12A are made of so-called "disposable" material, that is with a very low cost material which allows to replace the divisions 12A after they have been incised several times during the travels of the blades 22 and 23, without the costs of these replacements significantly affecting the general production costs.

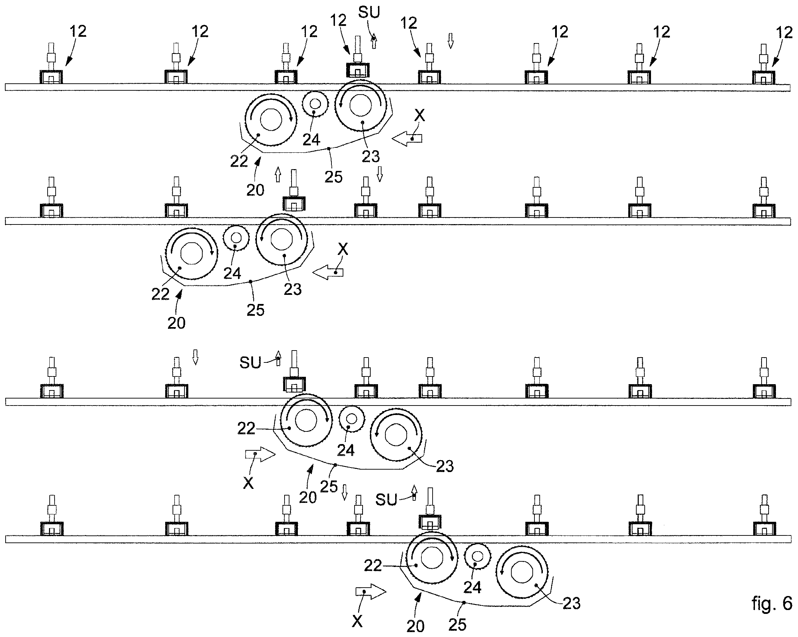

Alternatively, a solution is provided which provides, as shown schematically in Fig. 6, a rapid instantaneous lifting and a subsequent lowering of each suction bar 12 upon the passage of the blade that performs the cutting of the slab-shaped element 2.

This condition, which allows to not incise the reference divisions 12A, is indicated by the arrows "SU" in Fig. 6 and is made in a manner known to the person skilled in the art and, therefore, not described in detail.

In alternative embodiments, the second cutting means 4 can comprise a laser beam cutting unit, which forms the dynamic cutting front, or a straight saw.

The functioning of the machine 1 is described below with reference to a single slab-shaped element 2, but it can be repeated cyclically for all the slab-shaped elements 2 to be cut.

Each slab-shaped element 2 to be cut to obtain sub-elements 2A reaches the feed transporter 7 from which it is removed by the prehensile unit 5 by means of the suction bars 12 which are located in contact with the upper surface of the slab-shaped element 2.

The prehensile unit 5, after removing the slab-shaped element 2, moves along the guide 16 of the frame 6 until it transports it into the cutting station "ST" in which the prehensile unit 5 is lowered, and positions it at a height such that it is able to be engaged by one of the blades 22 or 23.

The second cutting unit 20 performs a first cutting travel in the cutting direction "X", for example in the direction toward the left for the observer, and in this travel the blade 23 is active while the blade 22 is idle.

The pre-incisor 24 first incises the thickness of the slab-shaped element 2 to be cut and subsequently the blade 23 penetrates into it, cutting it completely.

In performing the first cutting travel, the blade 23, as stated, can also incise the reference divisions 12A or, alternatively, upon the passage of the blade 23, each suction bar 12 is lifted and lowered instantaneously to avoid contact with the active front of the blade 23, safeguarding the integrity of the reference divisions 12A.

When the first cutting travel has been completed, if a second cut parallel to the previous one is to be performed, the prehensile unit 5 moves in the cutting direction "Z" by a distance equal to the distance between the first cut and the next cut to be performed.

Before performing the second cut, still in the direction "X", but in a return travel, the rocker arm body 25 rotates and takes the blade 22 to a raised and active position and the blade 23 to an idle position.

A second cutting travel therefore begins, opposite to the previous one, in which the pre-incisor 24 incises the thickness of the slab-shaped element 2 and, subsequently, the blade 22 cuts it completely following the trace of the pre-incisor 24.

If, according to the cutting program, the first and second cuts are sufficient, the prehensile unit 5 moves the slab-shaped element 2 already partially cut in the first cutting direction "X" toward the first cutting units 3A which cut the slab-shaped element 2 in the cutting direction "Z", in the specific case perpendicular to the direction "X", obtaining the sub-elements 2A.

It should be noted that during the entire cutting cycle, the prehensile unit 5 retains the slab-shaped element 2 both when it is still in an integral form, and also when it is cut in the cutting directions "X" and "Z".

When the cutting cycle has been completed and the sub-elements 2A have been obtained, the prehensile unit 5 moves above the release and distancing transporter 8 onto which the sub-elements 2A are deposited, after the suction action supplied by the suction bars 12 has been deactivated.

The prehensile unit 5 returns to the beginning of the cycle to remove a subsequent slab-shaped element 2 while the sub-elements 2A are sent to other processing or packaging stations.

It should be noted that in correspondence with both the first cutting units 3A and also the second cutting unit 20, known systems can be provided for the suction and accumulation of the chips and dust generated during the execution of the cuts, to avoid them spreading into the environment.

A person of skill in the art understands that the entire operative cycle is controlled by an electronic control unit which is programmable and into which the dimensional and numerical data of the sub-elements to be obtained are preliminarily uploaded.

In practice, it has been found that the invention achieves the intended purposes.

The invention as conceived is susceptible to modifications and variations, all of which come within the scope of the invention as defined by the claims.

## Claims

1. A machine (1) to cut to size slab-shaped elements (2) comprising:
- a station (SA) to feed slab-shaped elements (2) and a station (SR) to release and distance sub-elements (2A) obtained from said slab-shaped elements (2);
- at least one cutting station (ST) to cut said slab-shaped elements (2) that comprises first cutting means (3) in a first cutting direction (Z);
- at least one prehensile unit (5) of said slab-shaped elements (2), supported mobile to a support frame (6), mobile between said feed station (SA), said cutting station (ST), said release and distancing station (SR), and vice-versa;
- second cutting means (4) for cutting in a second cutting direction (X) transverse to said first cutting direction (Z), wherein said at least one prehensile unit (5) Z is configured to be stably maintained in a prehensile configuration between said feed station (SA), cutting station (ST), release station (SR), and second cutting means (4), **characterized in that** said second cutting means (4) comprise:
- at least one second cutting unit (20) that has a dynamic cutting front and is supported mobile to said frame (6) with forward and backward travels by means of an additional crosspiece or guide (21);
- activation means to activate said dynamic cutting front;
- sliding support means of said at least one second cutting unit (20) with a forward and back travel in said second cutting direction (X).

2. The machine as in claim 1, wherein said second cutting direction (X) is perpendicular to said first cutting direction (Z).

3. The machine as in claim 1, wherein said at least one second cutting unit (20) comprises a rocker arm body (25) to which a pair of counter-rotating motorized blades are supported, said rocker arm body (25) being mobile between two end positions in which at least one of said blades is in an active cutting position and the other is in an idle position, and vice versa.

4. The machine as in any claim hereinbefore, wherein said first cutting means (3) comprise a plurality of first cutting units (3A) arranged adjacent to each other on a common support crosspiece (19) with adjustable interdistances.

5. The machine as in claim 1, wherein upstream and downstream of said cutting station (ST) at least a feed transporter (7) of said slab-shaped elements (2) and a release and distancing transporter (8) of said sub-elements (2A) obtained from said slab-shaped elements (2) are provided.

6. The machine as in claim 1, wherein said at least one prehensile unit (5) comprises a plurality of suction bars (12) associated with said prehensile unit (5), parallel with respect to each other with adjustable interdistances.

7. The machine as in claim 6, wherein said bars (12) comprise perimeter reference division means (12A) for abutment and contact with said slab-shaped elements.

8. A method to cut to size slab-shaped elements (2), comprising:
- feeding a succession of said slab-shaped elements (2) using feed means (7);
- removing each slab-shaped element (2) from said feed means using prehensile means (5);
- taking each slab-shaped element (2) to first cutting means (3) using said prehensile means (5);
- performing at least one cut in a first cutting direction (Z);
- depositing sub-elements (2A) obtained on release and distancing means (8) located downstream of a cutting station (ST);
- cutting with second cutting means (4) located in said cutting station (ST) said slab-shaped elements (2) in a second cutting direction (X) transverse to said first cutting direction (Z), wherein in said taking, performing at least one cut, depositing and cutting with second cutting means (4) wherein said prehensile means (5) are stably maintained in a prehensile configuration
**characterized in that** at least one second cutting unit (20) of said second cutting means (4) is provided to have a dynamic cutting front, wherein said dynamic cutting front is selectively activated by activation means and said at least one second cutting unit (20) slides on support means with a forward and back travel in said second cutting direction (X).

9. Method as in claim 8, wherein said second cutting direction (X) is perpendicular to said first cutting direction (Z).

## Patentansprüche

1. Eine Maschine (1) zum Zuschneiden plattenförmiger Elemente (2) umfassend:
- eine Station (SA) zum Zuführen plattenförmiger Elemente (2) und eine Station (SR) zur Freigabe und Distanzierung von Unterelementen (2A), die von den plattenförmigen Elementen (2) erhalten wurden;
- mindestens eine Schneidstation (ST) zum Schneiden der plattenförmigen Elemente (2), welche erste Schneidmittel (3) in einer ersten Schneidrichtung (Z) umfasst;
- mindestens eine zum Greifen der plattenförmigen Elemente (2) geeignete Greifeinheit (5), welche auf einem Auflagerahmen (6) beweglich getragen wird und zwischen der Zufuhrstation (SA), der Schneidstation (ST), der Freigabe- und Distanzierungsstation (SR) und umgekehrt beweglich ist;
- zweite Schneidmittel (4) zum Schneiden in einer zweiten Schneidrichtung (X) quer zu der ersten Schneidrichtung (Z), wobei die mindestens eine Greifeinheit (5) so konfiguriert ist, dass sie stabil in einer greiffähigen Konfiguration zwischen der Zufuhrstation (SA), der Schneidstation (ST), der Freigabestation (SR) und den zweiten Schneidmitteln (4) gehalten wird, **dadurch gekennzeichnet, dass** die zweiten Schneidmittel (4) umfassen:
- mindestens eine zweite Schneideinheit (20), die eine dynamische Schneidfront aufweist und mit Vorwärts- und Rückwärtsbewegungen durch ein zusätzliches Querstück oder eine Führung (21) beweglich an dem Rahmen (6) gehalten wird;
- Aktivierungsmittel zum Aktivieren der dynamischen Schneidfront;
- Gleitunterstützungsmittel der mindestens einen zweiten Schneideinheit (20) mit einer Vorwärts- und Rückwärtsbewegung in der zweiten Schneidrichtung (X).

2. Maschine gemäß Anspruch 1, wobei die zweite Schneidrichtung (X) senkrecht zur ersten Schneidrichtung (Z) ist.

3. Maschine gemäß Anspruch 1, wobei die mindestens eine zweite Schneideinheit (20) einen Kipphebelkörper (25) umfasst, von dem ein Paar gegenläufige motorisierte Klingen getragen werden, wobei der Kipphebelkörper (25) zwischen zwei Endpositionen, in denen mindestens eine der Klingen in einer aktiven Schneidposition und die andere in einer inaktiven Position ist und umgekehrt, beweglich ist.

4. Maschine gemäß irgendeinem vorhergehenden Anspruch, wobei die ersten Schneidmittel (3) eine Vielzahl an ersten Schneideinheiten (3A) umfassen, die nebeneinanderliegend auf einem gemeinsamen Querträger (19) mit einstellbaren Abständen angeordnet sind.

5. Maschine gemäß Anspruch 1, wobei stromaufwärts und stromabwärts der Schneidstation (ST) mindestens ein Zufuhrtransporter (7) der plattenförmigen Elemente (2) und ein Freigabe- und Distanzierungstransporter (8) der von den plattenförmigen Elementen (2) erhaltenen Unterelemente (2A) bereitgestellt werden.

6. Maschine gemäß Anspruch 1, wobei die mindestens eine Greifeinheit (5) eine Vielzahl an Ansaugstangen (12) umfasst, die mit der Greifeinheit (5) verbunden sind und parallel zueinander mit einstellbaren Abständen angeordnet sind.

7. Maschine gemäß Anspruch 6, wobei die Stangen (12) Umfangsreferenzteilungsmittel (12A) als Widerlager und Kontakt mit den plattenförmigen Elementen umfassen.

8. Verfahren zum Zuschneiden plattenförmiger Elemente (2), umfassend:
- Zuführen einer Reihe plattenförmiger Elemente (2) unter Verwendung von Zufuhrmitteln (7);
- Entfernen jedes plattenförmigen Elements (2) von den Zufuhrmitteln unter Verwendung von Greifmitteln (5);
- Abgabe jedes plattenförmigen Elements (2) an erste Schneidmittel (3) unter Verwendung der Greifmittel (5);
- Durchführen mindestens eines Schnitts in einer ersten Schneidrichtung (Z);
- Ablegen der erhaltenen Unterelemente (2A) auf stromabwärts einer Schneidstation (ST) gelegenen Freigabe- und Distanzierungsmitteln (8);
- Schneiden, mit in der Schneidstation (ST) angeordneten zweiten Schneidmitteln (4), der plattenförmigen Elemente (2) in einer zweiten Schneidrichtung (X) quer zur ersten Schneidrichtung (Z), wobei bei der Aufnahme, der Durchführung mindestens eines Schnitts, der Ablage und dem Schneiden mit den zweiten Schneidmitteln (4) die Greifmittel (5) stabil in einer greiffähigen Konfiguration gehalten werden, **dadurch gekennzeichnet, dass** mindestens eine zweite Schneideinheit (20) der zweiten Schneidmittel (4) so bereitgestellt wird, dass sie eine dynamische Schneidfront aufweist, wobei die dynamische Schneidfont selektiv durch Aktivierungsmittel aktiviert wird, und die mindestens eine zweite Schneideinheit (20) auf Auflagemitteln mit einer Vorwärts- und Rückwärtsbewegung in der zweiten Schneidrichtung (X) gleitet.

9. Verfahren gemäß Anspruch 8, wobei die zweite Schneidrichtung (X) senkrecht zur ersten Schneidrichtung (Z) ist.

## Revendications

1. Machine (1) destinée à découper sur mesure des éléments en forme de dalle (2) comprenant
- un poste (SA) destinée à alimenter des éléments en forme de dalle (2) et un poste (SR) destinée à libérer et à séparer des sous-éléments (2A) obtenus à partir desdits éléments en forme de dalle (2) ;
- au moins un poste de découpe (ST) destiné à découper lesdits éléments en forme de dalle (2) qui comprend des premiers moyens de découpe (3) dans une première direction de découpe (Z) ;
- au moins une unité de préhension (5) desdits éléments en forme de dalle (2), supportée de manière mobile sur un cadre de support (6), mobile entre ledit poste d'alimentation (SA), ledit poste de découpe (ST), ledit poste de libération et de séparation (SR), et vice-versa ;
- des seconds moyens de découpe (4) destinés à découper dans une seconde direction de découpe (X) transversale à ladite première direction de découpe (Z), dans laquelle ladite au moins une unité de préhension (5) est configurée pour être maintenue de manière stable dans une configuration de préhension entre ledit poste d'alimentation (SA), ledit poste de découpe (ST), ledit poste de libération (SR), et lesdits seconds moyens de découpe (4), **caractérisée en ce que** lesdits seconds moyens de découpe (4) comprennent :
- au moins une seconde unité de découpe (20) qui présente un front de découpe dynamique et qui est supportée de manière mobile sur ledit cadre (6) avec des déplacements vers l'avant et vers l'arrière au moyen d'une traverse ou d'un guide supplémentaire (21) ;
- des moyens d'activation pour activer ledit front de découpe dynamique ;
- des moyens de support coulissants de ladite au moins une seconde unité de découpe (20) avec un déplacement vers l'avant et vers l'arrière dans ladite seconde direction de découpe (X).

2. Machine selon la revendication 1, dans laquelle ladite seconde direction de découpe (X) est perpendiculaire à ladite première direction de découpe (Z).

3. Machine selon la revendication 1, dans laquelle ladite au moins une seconde unité de découpe (20) comprend un corps de bras oscillant (25) sur lequel une paire de lames motorisées à rotation inversée sont supportées, ledit corps de bras oscillant (25) étant mobile entre deux positions d'extrémité dans lesquelles au moins l'une desdites lames est dans une position de découpe active et l'autre est dans une position de repos, et vice versa.

4. Machine selon l'une quelconque des revendications précédentes, dans laquelle lesdits premiers moyens de découpe (3) comprennent une pluralité de premières unités de découpe (3A) agencées adjacentes les unes aux autres sur une traverse de support commune (19) avec des interdistances ajustables.

5. Machine selon la revendication 1, dans laquelle en amont et en aval dudit poste de découpe (ST) sont prévus au moins un transporteur d'alimentation (7) desdits éléments en forme de dalle (2) et un transporteur de libération et de séparation (8) desdits sous-éléments (2A) obtenus à partir desdits éléments en forme de dalle (2).

6. Machine selon la revendication 1, dans laquelle ladite au moins une unité de préhension (5) comprend une pluralité de barres d'aspiration (12) associées à ladite unité de préhension (5), parallèles les unes aux autres avec des interdistances ajustables.

7. Machine selon la revendication 6, dans laquelle lesdites barres (12) comprennent des moyens de division de référence de périmètre (12A) destinés à venir en butée et en contact avec lesdits éléments en forme de dalle.

8. Procédé destiné à découper sur mesure des éléments en forme de dalle (2), comprenant les étapes consistant à
- alimenter une succession desdits éléments en forme de dalle (2) à l'aide de moyens d'alimentation (7) ;
- retirer chaque élément en forme de dalle (2) à partir desdits moyens d'alimentation à l'aide de moyens de préhension (5) ;
- amener chaque élément en forme de dalle (2) à des premiers moyens de découpe (3) à l'aide desdits moyens de préhension (5) ;
- effectuer au moins une découpe dans une première direction de découpe (Z) ;
- déposer des sous-éléments (2A) obtenus sur des moyens de libération et de séparation (8) situés en aval d'un poste de découpe (ST) ;
- découper, à l'aide de seconds moyens de découpe (4) situés dans ledit poste de découpe (ST), lesdits éléments en forme de dalle (2) dans une seconde direction de découpe (X) transversale à ladite première direction de découpe (Z), dans lequel lors des étapes consistant à amener, effectuer au moins une découpe, déposer et découper avec des seconds moyens de découpe (4), lesdits moyens de préhension (5) sont maintenus de manière stable dans une configuration de préhension **caractérisé en ce qu'**au moins une seconde unité de découpe (20) desdits seconds moyens de découpe (4) est prévue pour avoir un front de découpe dynamique, dans lequel ledit front de découpe dynamique est activé de manière sélective par des moyens d'activation et ladite au moins une seconde unité de découpe (20) coulisse sur des moyens de support avec un déplacement vers l'avant et vers l'arrière dans ladite seconde direction de découpe (X).

9. Procédé selon la revendication 8, dans lequel ladite seconde direction de découpe (X) est perpendiculaire à ladite première direction de découpe (Z).
